# DEMANDE DE BREVET EUROPEEN

(11) **EP 1 061 048 A1**
(43) Date de publication de la demande: **20.12.2000**
(21) Numéro de dépôt: 00870071.8
(22) Date de dépôt: 13.04.2000
(51) Int. Cl.: C02F 1/68, C02F 1/44, C02F 1/78, B67D 1/00

(54) **Distributeur automatique de l'eau potable ménagère et de l'eau pétillante avec unités de traitement d'eau**

(30) Priorité: 15.04.1999 BE 9900259
(71) Demandeur: Vergouwen, Frans, 2100 Deurne (BE)
(72) Inventeur: Vergouwen, Frans, 2100 Deurne (BE)

(57) **Abrégé**

Machine de purification d'eau courante en eau potable ménàgere et eau pétillante. L'eau est purifiée par des filtres à carbone actif et par osmose renversée (Schéma n° 19,20,21).

Cette eau est désinfectée par de l'Ozon lors de la mise en bouteilles (Schéma n° 15).

## Description

Machine de purification d'eau courante en eau potable ménagère et eau pétillante. L'eau est purifiée par des filtres à carbone actif et par osmose renversée(Schéma n° 19; 20 et 21).

Cette eau est désinfectée par de l'Ozon lors de la mise en bouteilles(Schéma n° 15).

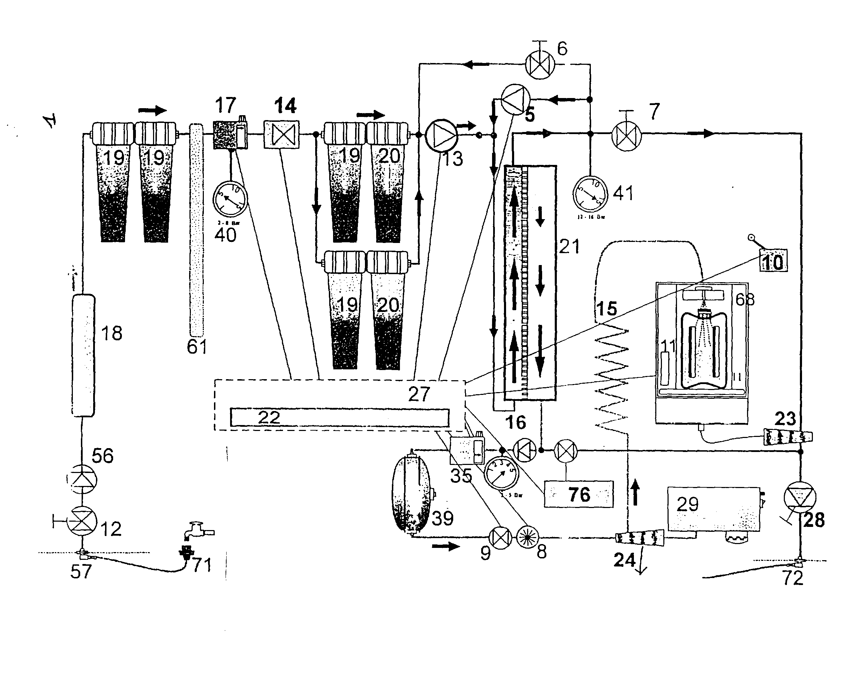

## Revendications

1. La mise en bouteilles par le consommateur lui-même,de l'eau courante purifiée et de l'eau pétillante, dans des bouteilles réutilisables.
